(19) Europäisches Patentamt
European Patent Office
Office européen des brevets

(11) **EP 2 654 316 A1**

(12) **EUROPEAN PATENT APPLICATION**

(43) Date of publication:
**23.10.2013 Bulletin 2013/43**

(51) Int Cl.:
*H04N 21/8355* (2011.01)    *H04N 21/436* (2011.01)
*H04N 21/41* (2011.01)    *H04N 21/442* (2011.01)

(21) Application number: **12305454.6**

(22) Date of filing: **19.04.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Onno, Stéphane**
**92443 Issy-Les-Moulineaux (FR)**

• **Neumann, Christoph**
**92443 Issy-Les-Moulineaux (FR)**
• **Heen, Olivier**
**92443 Issy-Les-Moulineaux (FR)**

(74) Representative: **Ruellan-Lemonnier, Brigitte et al**
**Thomson**
**1, rue Jeanne d'Arc**
**92443 Issy-les-Moulineaux, Cedex (FR)**

(54) **A system for enforcing an access policy for content item consumption**

(57)    Enforcing a global access policy, comprising a global access rule for a user's devices, for consumption of a content item. The user's devices advantageously comprise a set-top box (112), a tablet (140) and a gateway (111). The gateway (111) is configured to split the global access rule into local access rules for the set-top box (112) and the tablet (140) so that independent consumption of the content item by the set-top box (112) and the tablet (140) according to the respective local access rules does not violate the global access rule; and to send the local access rules to a first and a second enforcement point (1121; 151; 141; 123), which are configured to receive a request to access the content item from a user device (112; 140); and allow or inhibit access to the content item depending on whether or not access to the content item is authorized by the local access rule for the user device (112; 140) from which the request was received.

Figure 1

EP 2 654 316 A1

**Description**

TECHNICAL FIELD

The present invention relates generally to digital content delivery, and in particular to controlling access to digital content.

BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

In today's digital multimedia distribution networks, content providers may distribute free content or sell valuable (often similar) content such as Pay TV to e.g. broadband customers and Internet customers. In the former case, the content is available through a broadband connection; in the latter case, the content is accessible over the Internet, typically from a public portal. The two possibilities usually are not linked together. For this reason, an end-user having already subscribed to broadband content access at home must also subscribe to (possibly a different content provider) to Internet content access in order to obtain the same (or often similar) content.

Technically speaking, broadband access and Internet access are implemented using separated, independent enforcement points. One enforcement point allows local access to a content using the broadband network while another enforcement point allows (possibly remote) Internet access. There is no communication or synchronization between the enforcement points.

WO 2009/106818 teaches a solution in which a content provider distributes content to, for example, a set-top box to be shown on a home display or to a mobile phone. When the mobile user wishes to consume the content, it connects to and authenticates with a server. The server then streams the content to the mobile phone and also sends a disable signal to the set-top box, thereby making sure that the content is only consumed by one device. While this solution enables access through different channels, a drawback is that the server must be accessible from both networks, which means that the solution does not work in case the different networks are distinct or local.

Slingbox is a device that connects to the audio and/or video output of a consumer electronics device in a user's home. The Slingbox receives the content and redirects it to the user's remote device or other device chosen by the user. This solution has the drawbacks that the quality of the redirected content may be inferior since the redirected content is taken from the output of another device. In addition, it is a drawback to the content provider that the redirection of the content may not be controlled.

HbbTV® (http: //www.hbbtv.org/) and Project Canvas (http: //www. projectcanvas.co.uk) frameworks combine broadcast and broadband Internet links for a compliant home device. The main goal is to make cost effective the content repurposing from Internet to broadcast TV receiver for improving the end-user experience.

It will thus be appreciated that there is a need for a solution that is able to able to identify current access to a content (e.g. from broadband or the Internet), and allow new access or remove an existing access according to a global access policy and a given access request. The solution should not rely on a central and always available policy server.

The problem may thus be stated as how to make a plurality of enforcements points cooperate to ensure that distributed access to a given content conforms with the global policy of the content provider. The present invention provides such a solution.

SUMMARY OF INVENTION

In a first aspect, the invention is directed to a system for enforcing a global access policy for consumption of a content item, the global access policy comprising a first global access rule for a user's devices, which comprise a first device, a second device and a third device. The system comprises the third device configured to split the first global access rule into a first local access rule for the first device and a second local access rule for the second device so that independent consumption of the content item by the first device and the second device respectively according to the first local access rule and the second local access rule does not violate the first global access rule; and send the first local access rule to a first enforcement point and the second local access rule to the second enforcement point. The system further comprises the first enforcement point and the second enforcement point configured to receive a request to access the content item from a user device; and allow or inhibit access to the content item depending on whether or not access to the content item is authorized by the local access rule for the user device from which the request was received.

In a first preferred embodiment, the third device is a gateway in a home network. It is advantageous that the first enforcement point is implemented in a network termination element connected to the gateway and the second enforcement point is implemented in a content server contactable by the second device via a network distinct from the home network.

In a second preferred embodiment, the first enforcement point is implemented by the first device and the second enforcement point is implemented by the second device.

In a third preferred embodiment, the global access policy further comprises a second global access rule for a user's devices. The first enforcement point and the second enforcement point are configured to exchange information about access states and current access requests for the content, and to allow or inhibit access to the content item also depending on whether or not access to the content item is authorized by the second global access rule for the user device from which the request was received.

In a fourth preferred embodiment, the first enforcement point is implemented on the third device.

BRIEF DESCRIPTION OF DRAWINGS

Preferred features of the present invention will now be described, by way of non-limiting example, with reference to the accompanying drawings, in which

Figure 1 illustrates an exemplary network in which a preferred embodiment of the present invention is used;
Figure 2 illustrates a synchronization method according to a preferred embodiment of the present invention; and
Figure 3 illustrates a network according to an alternate embodiment of the present invention.

DESCRIPTION OF EMBODIMENTS

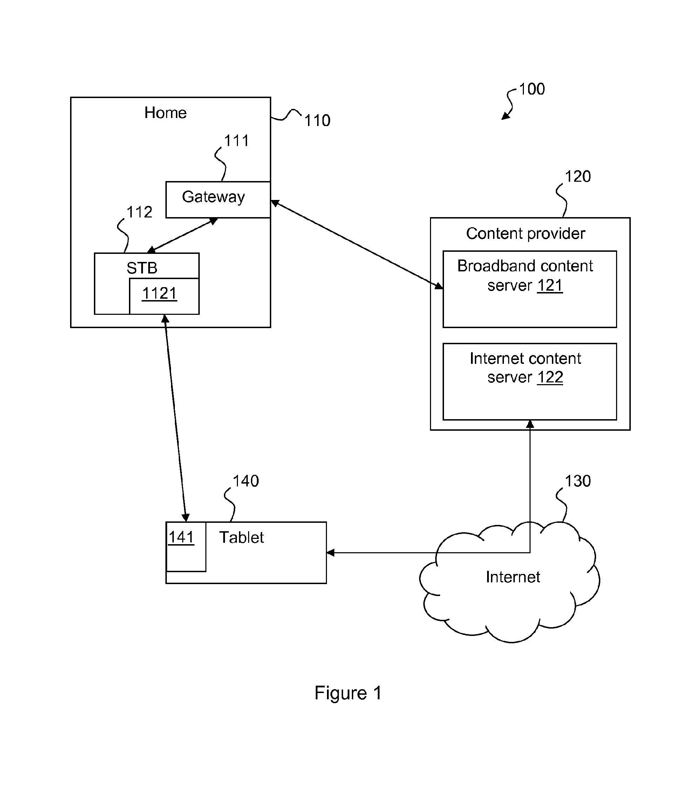

Figure 1 illustrates an exemplary network in which a preferred embodiment of the present invention is used. The network 100 comprises a home network 110, a content provider 120, the Internet (or other suitable network) 130, and a tablet 140.

The home network 110 comprises a gateway 111 connected to a set-top box (STB) 112; naturally, there may be more devices in the home network 110. The gateway 111 is configured to receive content from a broadband content server 121 (or other kind of suitable content server) at the content provider 120 - in either pull or push mode - and to forward the content to the STB 112. The broadband content server 121 is preferably connected to a content database.

The user of the home network 110 also has a tablet 140, e.g. an iPad (or other kind of mobile content rendering device, such as a mobile phone). The tablet 140 may be used as part of the home network 110, in which case it receives content from the gateway. The tablet 140 may also be used outside the home network 140, in which case it advantageously communicates, via the Internet 130, with an internet content server 122 at the content provider 120 so as to order and receive content.

It will be noted that in WO 2009/106818, the content provider 120 also enforces consumption rules, such as who gets precedence in case of "conflicting access", i.e. when devices desire access to content that may not be granted to all of the devices. This may be the case if the devices simultaneously want to consume access that may not be consumed by more than one device at a time.

In contrast to this prior art solution, possibly conflicting access is resolved by distributed enforcement points according to a global access policy, i.e. a policy that applies to all of the user's devices. These enforcement points are advantageously located in content consuming devices or in network termination devices. Figure 1 illustrates the former case: a first enforcement point 1121 resides within the STB 112 and a second enforcement point 141 within the tablet 140.

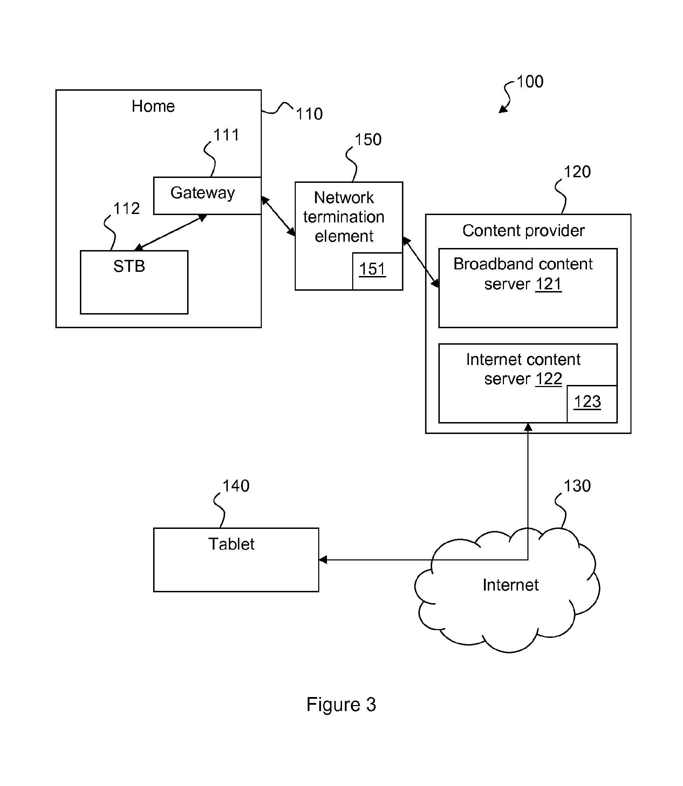

The skilled person will appreciate that enforcement points, all of the user device's - i.e. the gateway 111, the STB 112 and the tablet 140 - and the content provider's servers 121, 122 are implemented using the necessary hardware such as processors, memory, interfaces etc., but this will not be described further since this is beyond the scope of the present invention. In addition, it is possible to share hardware; e.g. the tablet 140 and the second enforcement point 141 advantageously, but not necessarily, share some hardware, for instance a processor. The same holds true for the system in Figure 3 hereinafter.

It will also be appreciated that the enforcement points are preferably implemented at a 'network level', which is to say that they are not bound to a particular application for rendering the content. As such it is preferred to implement the enforcement points in a device's firewall, in a proxy, in an application enforcing MAC-based address control or in a Web Application Firewall (WAF).

While the distribution of the global policy is out of the scope of the present invention, it may be performed as described in this paragraph. The global policy is preferably set by the content provider 120 and may comprise a plurality of access policy rules. Different items of content from a provider may be subject to different policies. Global policies are defined centrally and then - possibly after having been adapted - pushed onto the distributed enforcement points. It is preferred that the content provider 120 attaches the global policy for a given content to the content itself. It is also preferred that the global policy is sent to the gateway 111.

According to the present invention, the global policy is advantageously split into a plurality of local policies, each of which is pushed to a different consuming device belonging to the user. The global policy is split so that when the consuming devices consume the same content item independently of one another, the global policy is not violated. In other words, the user receives a global policy that is then split among the user's devices. The expression 'user' may refer to a single person or other entity such as a company, but it may also refer to a group, such as the member of a family or of the household in which the home network is implemented. While it is preferred that the gateway 111 splits the global policy, it will be appreciated that this may also be performed by another device such as for example a computer (not shown) that belongs to the user and that is connected to the gateway 111 and even the STB 112 or the tablet 140. In the latter two cases, the 'splitter' is located in the same device as an enforcement point.

An example will make this clearer: if the gateway 111 receives a global policy for a content that comprises a global policy rule that limits the number of viewings on a tablet to 4 times, the gateway may split this global policy rule into two local policy rules. A first local policy rule is sent to a first tablet 140, limiting the number of local viewings to 2, while a second local policy rule is sent to a second tablet (not shown), also limiting the number of local viewings to 2. It will be appreciated that the global policy rule is respected by the two local policy rules.

The global policy rule can concern all of the user's devices (no more than n viewing on all the devices), but the global policy rule may also be more fine-tuned (max m viewings on device type A and max n viewings on device type B). The number of viewings may be split in any possible way: for N devices and a maximum of M viewings, the number of 'local' viewings $n_i$ may be set to

$0 \le n_i \le M$, provided that $\sum_1^N n_i \le M$. .

The splitting of the global policy may also be combined with local enforcement of the global policy. Once the local policies have been pushed to the local enforcement points, the local enforcement points may communicate and synchronize to resolve potential conflicting accesses. An example of a global policy rule that could be enforced this way is a mutually exclusive access to the service, allowing local access or remote access but not at the same time, as in WO 2009/106818. Other examples are limitation to n simultaneous accesses to the content and granting access for a specified duration independently of whether the access is local or remote. The global policy may also depend on the type of the device or any software client used or a combination thereof.

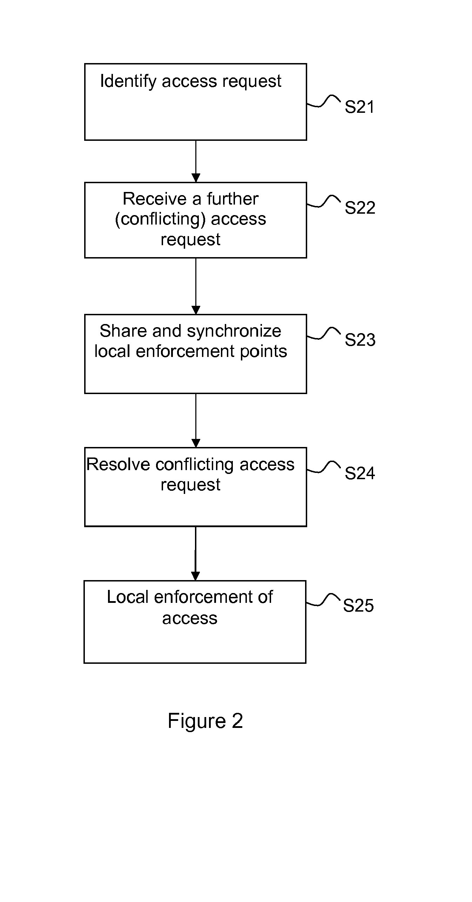

Figure 2 illustrates a synchronization method according to a preferred embodiment of the present invention.

A local enforcement point 1121, 141 identifies and authenticates S21 an access request to a content from an end-user or a device (e.g. a Digital Video Recorder).

Then a local enforcement point 1121, 141 (which may or may not be the same as the one in S21) receives S22 a further access request to the same content by a different end-user or device.

The local enforcement points 1121, 141 then share and synchronize S23 information about access states and current access requests, i.e. what is the current access state and what is the new access request. This is advantageously done via one or more secure channels. It will be noted that this step is preferably performed after step S21 too, but it is not shown as there can be no conflicting access with only one access to the content.

Each local enforcement point 1121, 141 then, preferably individually, resolves conflicting access requests S24 by evaluating the global policy and taking a decision to grant or deny access for each device it enforces. The decision is based on at least the information received during the synchronization phase.

Each local enforcement point 1121, 141 then locally enforces the access decision S25 by granting or denying access to the content.

It will be noted that the conflict resolution may intentionally create an interruption of content access for one or more devices at one or more enforcement points - cf. WO 2009/106818 where access for one device is interrupted by the central server.

In a preferred embodiment, one enforcement point controls local access and at least one other enforcement point controls remote access. The enforcement point for local access may be implemented on the home residential gateway (as illustrated in Figure 1) or in the core network such as in a DSLAM (Digital Subscriber Line Access Multiplexer) or CMTS (Cable Modem Termination System). The enforcement point for remote access may be for instance implemented in the content provider's Web Portal or on mobile phones or tablets.

The synchronization method may be implemented in the network illustrated in Figure 1, in which the enforcement points reside on devices, exemplified by the STB 112 and the tablet 140. The home gateway 111 advantageously comprises a hard drive (not shown) that can store blockbusters of the content provider's Video on Demand (VoD) catalogue that have been pushed onto the hard drive, while longtail (i.e. less popular) content is stored on the content provider's broadband content server 121. Such systems are known to increase the performance of VoD systems. The content provider's entire VoD catalogue is also accessible via Internet on the Internet content server 122.

Thus, the STB 112 and the tablet 140 (when in contact with the gateway 111) may consume blockbuster VoD content by accessing the VoD catalog on the local gateway 111. The STB 112 may also consume longtail content by connecting to the broadband content server 121. When roaming, the tablet 140 may connect to the Internet content server 121 to access VoD content.

The VoD content stored by the gateway 111 preferably comprises the corresponding global access policies. The global access policies are transformed by the gateway 111 into local access policies that are pushed to the enforcement points 1121, 141, i.e. onto the STB 112 and the tablet 140. It will be appreciated that the local access policies may be generated and pushed anytime between the reception of the content and a request to access the content, but they may also be generated in response to a request to access the content; an advantage of the latter arrangement is that only the local access policies that are needed are generated. The local access policies may comprise at least one local access policy rule (e.g. the STB may display the content once and the tablet twice), at least one global access policy rule (e.g. no more than one simultaneous viewing of the content), or a combination thereof.

It is preferred that a device that has been 'absent', for example switched off or not in connection with the gateway 111, contacts the gateway when it is no longer absent so as to update its local access policies. A local access policy may comprise particular rules to use when a device is 'isolated', which may be the case if the tablet 140 is used without a network connection.

Whenever the user accesses a particular content using the STB 112 or the tablet 140, their enforcement points 1121, 141 synchronize their states in order to enforce the local access policies. If, for example, both devices try to watch the same content at the same time, access is denied to one of the two devices, depending on the policy, i.e. which device has the higher priority. The priority may also depend on the context: a device that is currently accessing the content may be prioritized to avoid service interruption.

A particular case may occur: the tablet 140 may be used at home 110, i.e normally connected to the gateway 111. In this case, the global access policy is resolved locally between the STB 112 and the tablet 140. Thus even if the Internet connection is broken, the user is capable of consuming blockbuster content on the STB 112 or the tablet 140 in accordance with the global access policy.

Figure 3 illustrates an alternate network in which the enforcement points reside in network termination elements. A network termination element 150 is a network element belonging to a provider that provides the last connectivity leg to an end-user to the home 110. It could be a DSLAM (Digital Subscriber Line Access Multiplexer) for DSL or CMTS (Cable Modem Termination System) for Cable. For the remote access, the network termination element could be the Internet content server 122. The network termination element 150, located between the broadband content server 121 and the gateway 111, comprises a first enforcement point 151 and the Internet content server 122 comprises a second enforcement point 123.

The alternate network essentially functions in the same way as the network illustrated in Figure 1, i.e. the enforcement points communicate to enforce the global access policy, but there are some differences. As no enforcement points reside on the device - i.e. the STB 112 and the tablet 140 - the devices need a connection with a device with an enforcement point in order to ensure that the global access policy is respected. This connection is preferably, for the tablet 140, a Secure Authenticated Channel. It is also advantageous have at least one an enforcement point enforce policies for a group of devices, such as for example all the devices connected to the gateway 112 in the home 110.

The configuration in Figure 3 may also be used, with some modifications, for virtual gateways. Each household has a thin gateway (i.e. one with low functionality) that is connected to an edge network element, for example located in a DSLAM. The edge network element then preferably provides an Ethernet connection to home devices, DHCP, a firewall and other services such as video access. As the edge network element serves a plurality of households, it also isolates the networks and rights of each household.

The present invention can thus provide a solution in which the enforcement points are distributed, which means that there is no need for a central enforcement point that always must be available. The present invention can also make it possible for a plurality of distinct devices or networks to comply with a global security policy.

From the content provider point of view, it can be possible to do without a specific infrastructure component to handle synchronization between devices accessing content with respect to a policy.

It will be appreciated that while the description uses the expression content in the sense of multimedia data such as audio and video data either in the form of a stream (digital or analogue, broadcasted or VoD) or in the form of a file, but this is not to be interpreted in a limiting manner; it may e.g. include services as well. In addition, the examples given herein show a home network and a roaming device, but it is naturally also possible to have more elements, in particular a plurality of home networks, a plurality of roaming device, or combination thereof.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

**Claims**

1. A system (100) for enforcing a global access policy for consumption of a content item, the global access policy comprising a first global access rule for a user's devices (112; 140), the user's devices comprising a first device (112), a second device (140) and a third device, the system comprising:

    - the third device being configured to:

        split the first global access rule into a first local access rule for the first device (112) and a second local access rule for the second device (140) so that independent consumption of the content item by the first device (112) and the second device (140) respectively according to the first local access rule and the second local access rule does not violate the first global access rule; and send the first local access rule to a first enforcement point (1121; 151) and the second local access rule to the second enforcement point (141; 123);

- the first enforcement point (1121; 151) and the second enforcement point (141; 123) being configured to:

receive a request to access the content item from a user device (112; 140); and allow or inhibit access to the content item depending on whether or not access to the content item is authorized by the local access rule for the user device (112; 140) from which the request was received.

2. The system of claim 1, wherein the third device is a gateway (111) in a home network.

3. The system of claim 2, wherein the first enforcement point (151) is implemented in a network termination element connected to the gateway (111) and the second enforcement point (123) is implemented in a content server (122) contactable by the second device (140) via a network (130) distinct from the home network.

4. The system of claim 1, wherein the first enforcement point (1121) is implemented by the first device (112) and the second enforcement point (141) is implemented by the second device (140).

5. The system of claim 1, wherein the global access policy further comprises a second global access rule for a user's devices and wherein the first enforcement point (1121; 151) and the second enforcement point (141; 123) are further configured to exchange information about access states and current access requests for the content, and to allow or inhibit access to the content item also depending on whether or not access to the content item is authorized by the second global access rule for the user device (112; 140) from which the request was received.

6. The system of claim 1, wherein the first enforcement point is implemented on the third device.

Figure 1

Figure 2

Figure 3

Europäisches
Patentamt

European
Patent Office

Office européen
des brevets

# EUROPEAN SEARCH REPORT

Application Number

EP 12 30 5454

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 03/005145 A2 (NOKIA CORP [FI]; NOKIA INC [US]; KONTIO MARKKU [FI]; SIPPONEN JUHA [FI] 16 January 2003 (2003-01-16) <br> * abstract * <br> * page 11, line 6 - line 13 * <br> * page 11, line 22 - line 32 * <br> * page 12, line 12 - line 20 * <br> * page 15, line 9 - line 23 * <br> * page 19, line 9 - line 30 * <br> * page 25, line 5 - line 22 * <br> * page 26, line 9 - line 26 * <br> * page 28, line 9 - line 23 * <br> * page 29, line 3 - line 6 * <br> * page 32, line 29 - line 31 * <br> * page 34, line 26 - page 35, line 6 * <br> * page 40, line 4 - line 17 * <br> * page 41, line 27 - line 35 * <br> * page 42, line 16 - line 28 * <br> * page 43, line 1 - line 8 * <br> * page 44, line 15 - page 45, line 2 * <br> * page 45, line 15 - line 20 * <br> * page 46, line 3 - line 7 * <br> * page 61, line 30 - page 62, line 16 * <br> * page 71, line 3 - line 27 * <br> * page 79, line 20 - page 80, line 13 * <br> * figures 1,14 * <br><br> ----- <br><br> -/-- | 1-6 | INV. <br> H04N21/8355 <br> H04N21/436 <br> H04N21/41 <br> H04N21/442 <br><br><br><br><br><br><br><br><br><br><br><br> TECHNICAL FIELDS SEARCHED (IPC) <br><br> H04N |

The present search report has been drawn up for all claims

| Place of search | Date of completion of the search | Examiner |
|---|---|---|
| The Hague | 31 October 2012 | Fantini, Federico |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    ..........................................................................................
& : member of the same patent family, corresponding
    document

EPO FORM 1503 03.82 (P04C01)

Europäisches
Patentamt

European
Patent Office

Office européen
des brevets

# EUROPEAN SEARCH REPORT

Application Number

EP 12 30 5454

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/013772 A1 (PEINADO MARCUS [US]) 31 January 2002 (2002-01-31) <br> * paragraph [0008] - paragraph [0009] * <br> * paragraph [0044] * <br> * paragraph [0054] * <br> * paragraph [0090] * <br> * paragraph [0100] - paragraph [0103] * <br> * paragraph [0117] - paragraph [0119] * <br> * paragraph [0125] - paragraph [0127] * <br> * paragraph [0134] * <br> * paragraph [0165] * <br> * paragraph [0271] - paragraph [0272] * <br> * paragraph [0276] - paragraph [0277] * <br> * paragraph [0281] - paragraph [0284] * <br> * paragraph [0296] * <br> * paragraph [0299] - paragraph [0304] * <br> * paragraph [0324] * <br> * paragraph [0332] * <br> * figures 4,13,14,15 * <br> ----- | 1-6 | |
| A | "Next generation set-top-box core architecture; J.290 (11/06)", ITU-T STANDARD, INTERNATIONAL TELECOMMUNICATION UNION, GENEVA ; CH, no. J.290 (11/06), 29 November 2006 (2006-11-29), pages 1-54, XP017435157, [retrieved on 2007-06-18] <br> * page 11 - page 15 * <br> * page 19 * <br> * page 26 - page 33 * <br> ----- | 1-6 | TECHNICAL FIELDS SEARCHED (IPC) |

-/--

The present search report has been drawn up for all claims

| Place of search | Date of completion of the search | Examiner |
|---|---|---|
| The Hague | 31 October 2012 | Fantini, Federico |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

# EUROPEAN SEARCH REPORT

Application Number

EP 12 30 5454

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YANG LIU ET AL: "Rights Sharing Scheme for Online DRM System Using Digital Ticket", MANAGEMENT AND SERVICE SCIENCE, 2009. MASS '09. INTERNATIONAL CONFERENCE ON, IEEE, PISCATAWAY, NJ, USA, 20 September 2009 (2009-09-20), pages 1-6, XP031556542, ISBN: 978-1-4244-4638-4 * the whole document * | 1-6 | |
| A | NAIR S K ET AL: "Enabling DRM-Preserving Digital Content Redistribution", E-COMMERCE TECHNOLOGY, 2005. CEC 2005. SEVENTH IEEE INTERNATIONAL CONF ERENCE ON MUNICH, GERMANY 19-22 JULY 2005, PISCATAWAY, NJ, USA,IEEE, 19 July 2005 (2005-07-19), pages 151-158, XP010846191, DOI: 10.1109/ICECT.2005.43 ISBN: 978-0-7695-2277-7 * paragraph [05.2] * * paragraph [0006] * * paragraph [07.1] * * paragraph [7.2.2] * * paragraph [0009] * | 1-6 | TECHNICAL FIELDS SEARCHED (IPC) |
| A | US 2011/047584 A1 (CODADEEN JOSEPH [GB]) 24 February 2011 (2011-02-24) * abstract * * paragraph [0006] * * paragraph [0011] - paragraph [0014] * * paragraph [0029] - paragraph [0036] * | 1-6 | |

-/--

The present search report has been drawn up for all claims

| Place of search | Date of completion of the search | Examiner |
|---|---|---|
| The Hague | 31 October 2012 | Fantini, Federico |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 654 316 A1

Europäisches
Patentamt
European
Patent Office
Office européen
des brevets

# EUROPEAN SEARCH REPORT

Application Number

EP 12 30 5454

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TON KALKER ET AL: "The Coral DRM Interoperability Framework", CONSUMER COMMUNICATIONS AND NETWORKING CONFERENCE, 2007. CCNC 2007. 20 07 4TH IEEE, IEEE, PI, 1 January 2007 (2007-01-01), pages 930-934, XP031087919, ISBN: 978-1-4244-0667-8 * page 931 - page 933 * ----- | 1-6 | |

TECHNICAL FIELDS
SEARCHED (IPC)

The present search report has been drawn up for all claims

| Place of search | Date of completion of the search | Examiner |
|---|---|---|
| The Hague | 31 October 2012 | Fantini, Federico |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 2 654 316 A1

## ANNEX TO THE EUROPEAN SEARCH REPORT
## ON EUROPEAN PATENT APPLICATION NO.

EP 12 30 5454

This annex lists the patent family members relating to the patent documents cited in the above-mentioned European search report.
The members are as contained in the European Patent Office EDP file on
The European Patent Office is in no way liable for these particulars which are merely given for the purpose of information.

31-10-2012

| Patent document cited in search report | | Publication date | Patent family member(s) | | Publication date |
|---|---|---|---|---|---|
| WO 03005145 | A2 | 16-01-2003 | AU | 2002345256 A1 | 21-01-2003 |
| | | | CN | 1554063 A | 08-12-2004 |
| | | | EP | 1449132 A2 | 25-08-2004 |
| | | | US | 2004249768 A1 | 09-12-2004 |
| | | | US | 2005004875 A1 | 06-01-2005 |
| | | | US | 2007112676 A1 | 17-05-2007 |
| | | | WO | 03005145 A2 | 16-01-2003 |
| US 2002013772 | A1 | 31-01-2002 | EP | 1271279 A2 | 02-01-2003 |
| | | | JP | 4226849 B2 | 18-02-2009 |
| | | | JP | 2003101526 A | 04-04-2003 |
| | | | US | 2002013772 A1 | 31-01-2002 |
| | | | US | 2005216743 A1 | 29-09-2005 |
| | | | US | 2006259770 A1 | 16-11-2006 |
| | | | US | 2008244751 A1 | 02-10-2008 |
| US 2011047584 | A1 | 24-02-2011 | GB | 2457892 A | 02-09-2009 |
| | | | US | 2011047584 A1 | 24-02-2011 |
| | | | WO | 2009106818 A1 | 03-09-2009 |

EPO FORM P0459

For more details about this annex : see Official Journal of the European Patent Office, No. 12/82

14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009106818 A